# EUROPÄISCHE PATENTSCHRIFT

(11) **EP 2 412 251 B1**
(45) Veröffentlichungstag und Bekanntmachung des Hinweises auf die Patenterteilung: **22.04.2015**
(21) Anmeldenummer: 10187287.7
(22) Anmeldetag: 12.10.2010
(51) Int. Cl.: A23L 2/02, A23L 2/68, A23L 2/38, A23L 2/54

(54) **Verfahren zur Herstellung eines alkoholfreien Erfrischungsgetränks**
Method for producing an alcohol-free refreshing drink
Procédé de fabrication d'une boisson de rafraîchissement sans alcool

(30) Priorität: 29.07.2010 DE 102010032638
(43) Veröffentlichungstag der Anmeldung: 01.02.2012
(73) Patentinhaber: Stiegl Immobilien Vermietung GmbH, 5020 Salzburg (AT)
(72) Erfinder: Pöpperl, Christian, 5020 Salzburg (AT)
(74) Vertreter: Flügel Preissner Kastel Schober

(56) Entgegenhaltungen:
- EP-A1- 0 544 643
- EP-A2- 0 930 359
- WO-A1-2010/015416
- DE-U1-202009 010 718
- JP-A- 2010 130 945

## Beschreibung

Die Erfindung betrifft ein Verfahren zur Herstellung eines alkoholfreien Erfrischungsgetränks.

Im Allgemeinen handelt es sich bei alkoholfreien Erfrischungsgetränken um Fruchtsäfte, Fruchtnektare, isotonische Getränke und Limonaden. Zur Herstellung der zuletzt genannten Erfrischungsgetränke wird zumeist Wasser mit Fruchtsaft oder einem Fruchtauszug bzw. einem künstlichen Ersatzstoff vermischt, und weiter Zucker, Süßstoffe, Säuren, Konservierungsstoffe und Farb- und Aromastoffe hinzugefügt. Einige der genannten alkoholfreien Erfrischungsgetränke werden zusätzlich karbonisiert.

In jüngerer Zeit wurden jedoch neuere Verfahren zur Herstellung alkoholfreier Erfrischungsgetränke beschrieben, basierend auf der Fermentation von Pflanzenteilen wie Cerealien, Tee, Kräutern und ähnlichem.

Bekannt ist beispielsweise aus der EP 0 748 168 B1 die Herstellung eines alkoholfreien Erfrischungsgetränkes durch Fermentation einer aus Gerstenmalz hergestellten Bierwürze. Der Würze werden Zucker in Form von Saccharose und/oder Glucose zugesetzt, der durch einen Mikroorganismus in Gluconsäure verstoffwechselt wird. Der Nachteil dieses Verfahrens besteht darin, dass zusätzlich zu der Würze ein Zucker beigefügt werden muss.

In der WO 2010/015416 A1 ist ein Verfahren zur fermentativen Herstellung eines alkoholfreien Getränks beschrieben, wobei zunächst eine aus Cerealien hergestellte Würze durch Milchsäurebakterien zu einer milchsauren Würze verstoffwechselt wird. Die Milchsäurebakterien dieser milchsauren Würze werden durch Erhitzen inaktiviert. Dann wird aus dieser milchsauren Würze durch Hefefermentation eine Getränkegrundlage auf der Basis von Malz, d.h. eine Malzbase erzeugt. Erst nach Erzeugung der Malzbase durch die Hefe können verschiedene Fruchtsäfte zugegeben werden und so verschiedene Geschmacksrichtungen des fertigen Getränkes erzielt werden. Die Zugabe der Fruchtsäfte zu der Getränkegrundlage bringt eine Zugabe von Fructose und somit, abhängig von dem zugegebenen Fruchtsaft, eine Erhöhung des Süßegrades in dem resultierenden Getränk mit sich.

Aufgabe der Erfindung besteht darin, ein neues Verfahren zur fermentativen Herstellung eines verbesserten, im Geschmack abgerundeten alkoholfreien Erfrischungsgetränks vorzuschlagen.

Diese Aufgabe wird durch ein Verfahren zur Herstellung eines alkoholfreien Erfrischungsgetränkes mit den Merkmalen des Anspruches 1 gelöst.

Ein nach diesem Herstellungsverfahren herstellbares alkoholfreies Erfrischungsgetränk ist Gegenstand des Nebenanspruches.

Vorteilhafte Ausgestaltungen der Erfindung sind Gegenstand der Unteransprüche.

Ein Verfahren zur Herstellung eines alkoholfreien Erfrischungsgetränks hat die folgende Reihenfolge von Schritten:
a) Erzeugen einer Würze aus einem Pflanzenauszug;
b) Erzeugen eines Sauerguts durch Verstoffwechslung eines in der Würze vorliegenden Zuckers mittels einer Milchsäurekultur;
c) Erzeugen eines Sauergut-Fruchtlösungsgemischs durch Ausmischen des Sauerguts mit einer Fruchtlösung;
d) Verstoffwechseln von in dem Sauergut-Fruchtlösungsgemisch vorliegenden Zucker mittels eines Hefestammes zum Erzeugen eines Fermentationsgetränks;
e) Aufbereiten des in Schritt d) erzeugten Fermentationsgetränks.

Erfindungsgemäß wird im Gegensatz zu dem bekannten Verfahren bereits dem Sauergut eine Fruchtlösung beigefügt. Dann wird erfindungsgemäß dieses Sauergut-Fruchtlösungsgemisch mit einem Hefestamm in Kontakt gebracht, um so alle in dem Sauergut-Fruchtlösungsgemisch vorliegenden Zucker definiert zu verstoffwechseln. Somit wird der Süßegehalt vorzugsweise herabgesetzt. Es entsteht im Unterschied zu dem bekannten Getränk ein Getränk mit einem abgerundeteren Geschmack.

Nach beendeter Verstoffwechslung durch den Hefestamm wird das Fermentationsgetränk zu dem endgültigen alkoholfreien Erfrischungsgetränk aufbereitet.

Zum Erzeugen der Würze wird vorzugsweise Malz in Lösung gebracht, gemaischt und anschließend zur Gewinnung einer ungehopften Würze über einen Läuterbottich geklärt. In bevorzugter Ausgestaltung weist die Würze daher als Hauptfermentationszucker eine in dem Malz vorhandene Maltose auf. Die Maltose wird in einer ersten Fermentationsstufe mit einer Milchsäurekultur fermentiert. Die Milchsäurekultur verstoffwechselt den in der Würze enthaltenen Zucker über Glucose vorzugsweise zu L- und D-Milchsäure. Es können alle Milchsäurekulturen verwendet werden, die in der Lage sind, aus dem gelösten Malzzucker L- und D-Milchsäure zu produzieren. Aufgrund des Gehaltes an Milchsäure ist aus der Würze vorteilhaft ein Sauergut entstanden.

Zur Herstellung der dem Sauergut beizufügenden Fruchtlösung werden vorzugsweise verschiedene Fruchtsaftkonzentrate und Wasser miteinander vermengt und/oder Fruchtsäfte verwendet. Vorteilhaft wird das Sauergut und die Fruchtlösung homogenisiert, um eine gleichmäßige Verteilung der Fruchtlösungsmoleküle in dem Sauergut herzustellen.

In bevorzugter Ausgestaltung stellt die Fruchtlösung, die mit dem Sauergut vermischt worden ist, weitere Zuckerarten, vorzugsweise Fruktose, in dem Sauergut-Fruchtlösungsgemisch bereit. Wie beim ursprünglich vorhandenen Zucker kann auch die Fruktose, je nach eingestellter Kontaktzeit, von der Milchsäurekultur vorzugsweise zur Erhöhung des Säuregehaltes in dem Sauergut-Fruchtlösungsgemisch verstoffwechselt werden.

In einem ersten möglichen Verfahren werden die in dem Sauergut-Fruchtlösungsgemisch vorliegenden Zucker über einen längeren Zeitraum von mehreren Stunden mit den Milchsäurebakterien verstoffwechselt. Es entsteht so vorzugsweise ein Getränk mit einem hohen Säuregehalt.

In einem zweiten möglichen Verfahren wird nur eine kurze Verstoffwechlsung im Minutenbereich der in dem Sauergut-Fruchtlösungsgemisch vorliegenden Zucker durch die Milchsäurebakterien ermöglicht. Der Säuregehalt des resultierenden Getränks ist daher vorzugsweise geringer als bei dem ersten Verfahren.

Bei einem dritten möglichen Verfahren werden die Milchsäurebakterien vor Zugabe der Fruchtlösung abgetötet und so eine weitere Verstoffwechslung von Zucker zu Milchsäure verhindert. Der Säuregehalt des resultierenden Getränks ist bei diesem dritten Verfahren vorzugsweise geringer als bei den erstgenannten Verfahren und das Getränk weist einen abgerundeteren Geschmack auf.

Vorzugsweise wird, je nachdem, welche Säuremischung gewünscht ist, das Sauergut oder das Sauergut-Fruchtlösungsgemisch erhitzt, um so die Milchsäurekultur abzutöten und somit zu inaktivieren.

Vorzugsweise wird eine Würze mit einem Stammwürzegehalt von 0% bis 20%, vorzugsweise 8% bis 12%, verwendet. Dazu wird eine Vorderwürze mit einem Gehalt von etwa 17% bis 20% auf den gewünschten Stammwürzgehalt mit Hilfe von Brauwasser verdünnt. Der Stammwürzegehalt bezeichnet den Anteil der aus dem Pflanzenauszug, insbesondere dem Malz, im Wasser gelösten, nicht flüchtigen Stoffe vor der Verstoffwechslung durch die Milchsäurekultur. Nicht flüchtige Stoffe sind vor allem Maltose, Maltotriose, Saccharose, Proteine, Polyphenole und Vitamine. Der Stammwürzegehalt, vorzugsweise die Maltose, ist der Haupteinflussfaktor für den späteren Säuregehalt des alkoholfreien Erfrischungsgetränkes. Weiter beeinflusst der Stammwürzegehalt auch den Alkoholgehalt des resultierenden Getränkes. Der Alkoholgehalt des resultierenden alkoholfreien Erfrischungsgetränkes liegt im Allgemeinen in einem Bereich kleiner als 0,5 Vol.% alc., vorzugsweise kleiner als 0,35 Vol.% alc. Als alkoholfrei dürfen nach deutschem Lebensmittelrecht Getränke bezeichnet werden, die maximal 0,5 Voi.% alc. enthalten.

Vorzugsweise wird als Pflanzenauszug ein Getreideauszug verwendet. Besonders bevorzugt wird ein Gerstenauszug verwendet. Zusätzlich können in dem Gerstenauszug auch Auszüge anderer Cerealien enthalten sein. Damit können vorteilhaft die Rohstoffe, die zum Bierbrauen ohnehin in einer Brauerei verwendet werden, auch zur Herstellung des alkoholfreien Erfrischungsgetränkes verwendet werden und somit Anschaffungskosten für alternative Rohstoffe eingespart werden.

In besonders bevorzugter Ausgestaltung weist der Schritt b) die Teilschritte b1) Einimpfen der Milchsäurekultur, insbesondere des Stammes Lactobacillus amylovorus, in die Würze und b2) Überimpfen der Milchsäurekultur in die Würze und/oder Schritt b3) Erhitzen des Sauerguts auf. Alternativ könnte auch das in der Brauerei laufend hergestellte Sauergut verwendet werden.

Das Einimpfen einer Zellkultur oder einer Kultur mikrobieller Stämme zur Herstellung eines sog. Inoculums in der Würze verbessert vorzugsweise die Kultur der Milchsäurebakterien im Großansatz im späteren Schritt b2). Viele Bakterien benötigen eine bestimmte Zelldichte, um in eine exponentielle Wachstumsphase einzutreten. Ist das Volumen des Ansatzes zu klein, wächst die Kultur daher nicht oder nur sehr langsam an. Daher ist es von Vorteil, eine vorbestimmte Größe bzw. ein vorbestimmtes Volumen des Inoculums zu erreichen, bevor die Milchsäurekultur im Großansatz in einem Ausmischtank mit einer großen Menge an Würze kontaktiert wird. Vorteilhaft befinden sich die Milchsäurebakterien von Anfang bis Ende in einer ununterbrochenen exponentiellen Wachstumsphase. Somit können die Milchsäurebakterien vorteilhaft auch nach dem Schritt b2) exponentiell wachsen und die Würze verstoffwechseln.

In einem besonders bevorzugten Verfahren werden die Milchsäurebakterien durch Erhitzen des Sauerguts in Schritt b3) abgetötet. Damit verstoffwechseln sie vorteilhaft den vorhandenen Zucker nicht weiter zu Säure. Ob dieser Schritt durchgeführt wird oder nicht, kann vorzugsweise je nach gewünschtem Säuregehalt bzw. gewünschter Säuremischung frei gewählt werden.

In besonders bevorzugter Ausgestaltung wird zur Verstoffwechslung der Würze der spezielle Milchsäurestamm "Lactobacillus amylovorus" verwendet. Lactobazillen sind Bakterien, die durch Fermentation Milchsäure erzeugen. Sie können als Schädlinge in einem Brauereibetrieb auftreten und werden daher dort normalerweise bekämpft. Von Vorteil ist nun, dass diese für die Bierbrauerei normalerweise unerwünschten Bakterien zur Herstellung des alkoholfreien Erfrischungsgetränkes verwendet werden können. Lactobacillus amylovorus kann vorteilhaft leicht aus verschiedenen Wirten extrahiert werden und ist somit einfach zugänglich. Zudem besteht die Möglichkeit, den Stamm von einer Organismenbank zu beziehen. Es können jedoch jegliche andere geeignete Lactobazillen zur Verstoffwechslung der Würze zu Milchsäure verwendet werden.

Bevorzugt werden wenigstens einer der Schritte b2) bis d), mindestens jedoch d), besonders bevorzugt alle der Schritte b2) bis d), anaerob in einer CO₂-Überdruc Atmosphäre durchgeführt. Besonders bevorzugt ist ein CO₂-Überdruck von 0,05 bis 0,35 bar. Um vorteilhaft eine möglichst reine CO₂-Atmosphäre in dem Ausmischtank herzustellen, wird dieser vor Befüllung einer CO₂-Spülung unterworfen. Da CO₂ schwerer ist als die Umgebungsluft, sinkt es auf den Boden. Nach ausreichender Zeit hat das CO₂ somit die Umgebungsluft aus dem Ausmischtank verdrängt. Wird nun Würze und Milchsäurekultur in den Ausmischtank eingefüllt, ist das Material vorteilhaft hauptsächlich mit CO₂ in Kontakt. Es wird ein geringer Überdruck des CO₂ im Bereich von 0,05 bis 0,35 bar angelegt, um so die CO₂-Atmosphäre vorteilhaft zu stabilisieren. Damit kann die Umgebung des zu fermentierenden Materials vorteilhaft weitgehend von Sauerstoff freigehalten werden. Dies ist insbesondere von Vorteil im Schritt d), bei dem z.B. das in dem Gärtank vorliegende Sauergut-Fruchtlösungsgemisch mit einem Hefestamm verstoffwechselt wird. Hefe kann zwei Arten von Stoffwechselprozessen durchführen. Sie gilt als fakultativ aerob, was bedeutet, dass die Energiegewinnung sowohl durch Sauerstoff-Atmung als auch durch Gärung erfolgen kann. Als Ausgangsstoffe werden für beide Stoffwechselprozesse niedermolekulare Zucker verwendet, die Ausscheidungsprodukte unterscheiden sich jedoch. Im Falle der Sauerstoff-Atmung ist das Ausscheidungsprodukt im Wesentlichen Kohlenstoffdioxid, bei der Gärung entsteht hauptsächlich Ethanol. Das Mengenverhältnis der Produkte ist davon abhängig, ob die Umgebung, in der sich die Hefe befindet, Sauerstoff enthält oder nicht.

Bei der Herstellung des alkoholfreien Erfrischungsgetränkes soll die Hefe vorzugsweise lediglich den Stoffwechselprozess der Gärung durchführen. Daher ist es von Vorteil, wenn insbesondere der Kontaktzyklus des Sauergut-Fruchtlösungsgemischs mit der Hefe weitgehend unter Sauerstoffausschluss durchgeführt wird. So kann vorteilhaft die Sauerstoff-Atmung unterdrückt werden und somit die Bildung unerwünschter Stoffwechselprodukte vermieden werden.

Die Gesamtzeit des Schrittes b), der in den Teilschritten b1) und b2) durchgeführt wird, umfasst vorzugsweise 100 bis 150, mehr vorzugsweise 115 bis 130 Stunden. Schritt b) wird vorteilhaft bei einer Temperatur von 40 bis 60°C, vorzugsweise 45 bis 50°C, durchgeführt. Somit wird den Milchsäurebakterien vorteilhaft genügend Zeit gewährt, um die in der Würze vorliegende Maltose über Glucose zu Milchsäure zu verstoffwechseln. Der Temperaturbereich bringt den Vorteil, dass der Prozess der Milchsäureproduktion durch die Milchsäurebakterien kontrolliert werden kann.

Besonders bevorzugt werden die Milchsäurebakterien durch Erhitzen vor Zugabe der Fruchtlösung inaktiviert. Optional kann aber auch in Schritt c) zunächst das Sauergut-Fruchtlösungsgemisch, bestehend aus durch die Milchsäurebakterien verstoffwechselter Würze und der zugegebenen Fruchtlösung, in einem Schritt c1) homogenisiert werden. Damit werden die Einzelbestandteile in dem Sauergut-Fruchtlösungsgemisch möglichst gleichmäßig verteilt. Dies erleichtert es vorteilhaft den Milchsäurebakterien, den durch die Fruchtlösung eingebrachten Zucker zu erreichen und optional zu verstoffwechseln.

Vorteilhaft kann daher in einem optionalen Schritt c2) auch dieser weitere Zucker, insbesondere Fructose, durch die Milchsäurekultur verstoffwechselt werden. Durch die optionale Verstoffwechslung von zwei unterschiedlichen Zuckerarten durch die Milchsäurekultur kann vorteilhaft ein besonders angenehmer Geschmack des resultierenden alkoholfreien Erfrischungsgetränkes erzielt werden.

Vorzugsweise wird der Schritt c2) der optionalen Verstoffwechlsung des durch die Fruchtlösung eingebrachten Zuckers durch die Milchsäurebakterien ein bis sechs Stunden, insbesondere zwei bis vier Stunden, bei einer Temperatur von 40 bis 60°C, vorzugsweise bei 45 bis 50°C, durchgeführt. Der Temperaturbereich ist vorteilhaft dazu vorgesehen, die Milchsäureverstoffwechslung zu kontrollieren. Die Kontaktzeit der Milchsäurebakterien mit dem durch die Fruchtlösung eingebrachten Zucker ist mit ein bis sechs Stunden kürzer als die Kontaktzeit mit dem ursprünglich vorhandenen Zucker. Dadurch wird vorteilhaft erzielt, dass der Säuregehalt des resultierenden alkoholfreien Erfrischungsgetränkes nicht zu hoch und das resultierenden Getränk nicht zu sauer wird.

In einem Schritt c3) können dann die Milchsäurebakterien vorteilhaft durch Erhitzen des Sauergut-Fruchtlösungsgemisch inaktiviert werden. Vorzugsweise wird Schritt c3) bei einer Temperatur von 80 bis 100°C, insbesondere bei 85 bis 95°C, durchgeführt. In einem solchen Temperaturbereich werden die Milchsäurebakterien durch Abtötung inaktiviert und der Prozess der Milchsäureverstoffwechslung vorteilhaft gestoppt. Weiter vorteilhaft können durch das Erhitzen des Sauergut-Fruchtlösungsgemischs Trübstoffe ausgefällt werden, die im Endprodukt nicht mehr erwünscht sind. Weiter vorteilhaft werden durch das Erhitzen unerwünschte Aromastoffe ausgedampft. Die ausgefällten Trübstoffe können vorzugsweise durch Rotation (Zentrifugalkraft) ausgeschieden werden.

Durch beide Varianten, d.h. sowohl bei der Verstoffwechslung nur des Zuckers aus der Würze, z.B. Maltose, als auch bei der Verstoffwechslung des Zuckers aus der Würze und des Zuckers aus der Fruchtlösung, z.B. enthaltend Fructose, durch die Milchsäurebakterien, wird vorteilhaft ein Sauergut-Fruchtlösungsgemisch erzeugt, aus dem in Schritt d) durch Hefefermentation der vorliegenden Zucker das Fermentationsgetränk erzeugt wird. Zu keinem Zeitpunkt des Verfahrens liegt somit eine Getränkegrundlage, beispielsweise in Form einer Malzbase, vor, aus der dann geschmacklich verschiedene Getränke erzeugt werden. Welche Geschmacksrichtung erzeugt wird, muss schon vor der Hefeverstoffwechlsung festgelegt werden. Dadurch kann ein besonders abgerundeter Geschmack erzeugt werden.

Vorteilhaft wird Schritt d) in einem Zeitraum von 80 bis 90 Stunden bei einer kontinuierlich absinkenden Temperatur durchgeführt. Dabei ist es besonders vorteilhaft, wenn in einem Teilschritt d1) das Sauergut-Fruchtlösungsgemisch zunächst auf eine Temperatur von 0 bis 10°C, insbesondere 4 bis 8°C, abgekühlt wird. Erst wenn das Sauergut-Fruchtlösungsgemisch eine Temperatur im Bereich von 4 bis 8°C aufweist, wird vorteilhaft der Hefestamm in dem Sauergut-Fruchtlösungsgemisch angestellt, d.h. zugefügt. Der Temperaturbereich ist für den Gärungsvorgang des ausgewählten Hefestammes vorzugsweise optimal gewählt. Der Hefestamm soll in einer weiteren Fermentationsstufe vorzugsweise einen Teil des in dem Sauergut-Fruchtlösungsgemisch vorliegenden Zuckers weiter verstoffwechseln. Somit wird der Süßegehalt des resultierenden Getränks herabgesetzt. Es entsteht dabei Alkohol, jedoch lediglich in einer Menge, die den Grenzwert von 0,5 Vol./% alc. nicht überschreitet. Um den Prozessschritt der Hefevergärung zu steuern, wird die Temperatur des Sauergut-Fruchtlösungsgemisches kontinuierlich über einen Zeitraum von 50 bis 55 Stunden abgesenkt. Dabei erfolgt vorzugsweise ein getakteter Umwälzbetrieb, um so vorteilhaft eine homogene Fermentation zu erreichen. Weiter wird das Sauergut-Fruchtlösungsgemisch während der Kontaktzeit mit dem Hefestamm einer vorzugsweise einstündigen CO₂-Wäsche unterworfen, um vorteilhaft unerwünschte Aromastoffe auszutreiben.

In einer Ausgestaltung des Verfahrens wird nach Erreichen einer Temperatur zwischen 0 und 3°C eine länger andauernde Kühlphase von 25 bis 40 Stunden, insbesondere 30 bis 35 Stunden, durchgeführt, um vorteilhaft bei der tiefen Temperatur eine Ausfällung von Trübstoffen, die vorwiegend aus Eiweißfraktionen bestehen, zu erzielen. Die Trübstoffe setzen sich vorteilhaft in dem Fermentationstank ab und können somit vorzugsweise am Ende der Kühlphase abgeschlämmt werden.

Besonders bevorzugt wird ein untergäriger Hefestamm in dem Sauergut-Fruchtlösungsgemisch angestellt. Untergärige Hefe hat gegenüber obergäriger Hefe den Vorteil, dass sie sich in dem Fermentationstank absetzt und somit ausgeschlämmt werden kann. Zudem bildet die untergärige Hefe vorteilhaft erwünschte Gärungsnebenprodukte. Zusätzlich benötigt sie niedrigere Umgebungstemperaturen als obergärige Hefe zur Gärung und ist damit weniger anfällig für Verunreinigungen mit Fremdpilzen und Bakterien.

Vorzugsweise wird ein Saccharomyces carlsbergensis-Stamm verwendet. Es können jedoch auch andere geeignete untergärige Hefestämme zum Einsatz kommen.

Vorzugsweise werden die Hefezellen in einer Konzentration von 5 bis 15 x 10⁶ Hefezellen/ml in dem Sauergut-Fruchtlösungsgemisch angestellt. Somit liegt vorteilhaft eine genau definierte Hefemenge in dem Sauergut-Fruchtlösungsgemisch vor, die zum einen eine effektive Vergärung durch die Hefezellen ermöglicht und es zum anderen vorzugsweise ermöglicht, dass die Gärung einfach kontrolliert werden kann.

Vorzugsweise weist Schritt e) die Schritte Aufcarbonisieren, Aromatisieren und Filtrieren auf. Durch das Aufcarbonisieren wird dem resultierenden alkoholfreien Erfrischungsgetränk natürliches Gärungskohlendioxid zugesetzt, wobei der Kohlendioxidgehalt vorteilhaft individuell, bevorzugt auf 4,0 bis 4,4 g/l, eingestellt werden kann. Die Anwesenheit von Kohlensäure in dem fertigen Getränk bewirkt vorteilhaft, dass dieses besonders erfrischend schmeckt.

Vorteilhaft werden natürliche Aromastoffe zu dem alkoholfreien Erfrischungsgetränk zugefügt, um es somit geschmacklich abzurunden. Nach einer weiteren Homogenisierung des Gemisches wird das Getränk filtriert, um Trübstoffe herauszufiltern. Damit wird das Getränk zum einen vorteilhaft bis zu einem bestimmten Grad, vorzugsweise 5 bis 50 Trübungseinheiten, geklärt und zum anderen die Haltbarkeit des Getränkes vorteilhaft verbessert. Die Filtration wird vorzugsweise über Kieselgur in Form von Diatomeen durchgeführt, wobei insbesondere Schwebstoffe wie Eiweißpartikel und Hefezellen schonend herausgefiltert werden.

Vorzugsweise wird das Herstellungsverfahren ausschließlich mit natürlichen Rohstoffen nach dem Reinheitsgebot durchgeführt. Somit kann vorteilhaft ein alkoholfreies Erfrischungsgetränk hergestellt werden, das physiologisch wertvoll ist.

Das Verfahren kann auch zur Erzeugung eines Bio-Getränks eingesetzt werden. Z.B. ermöglicht die Verwendung von ausschließlich biologisch erzeugten Rohstoffen den Vertrieb als Bio-Produkt, was einen Vorteil gegenüber anderen fermentativ hergestellten alkoholfreien Erfrischungsgetränken, insbesondere beim informierten Verbraucher, bringt. Die anschließende Abfüllung des mit dem beschriebenen Verfahren hergestellten Getränkes kann nach üblichen Methoden unter Verwendung geeigneter Anlagen erfolgen.

Ausführungsbeispiele zur Herstellung des alkoholfreien Erfrischungsgetränkes werden nachfolgend anhand der beigefügten Zeichnungen näher erläutert. Darin zeigt:
- Fig. 1: ein erstes Fließbild eines ersten Prozessablaufes eines Herstellungsverfahrens zur Herstellung eines alkoholfreien Erfrischungsgetränkes;
- Fig. 2: ein zweites Fließbild eines zweiten Prozessablaufes zur Herstellung des alkoholfreien Erfrischungsgetränkes;
- Fig. 3: eine erste Variante eines dritten Fließbildes, die eine erste Ausführungsform eines dritten Prozessablaufes zur Herstellung des alkoholfreien Erfrischungsgetränkes zeigt;
- Fig. 4: eine zweite Variante des dritten Fließbildes, die eine zweite Ausführungsform des dritten Prozessablaufes zur Herstellung des alkoholfreien Erfrischungsgetränkes zeigt;
- Fig. 5: eine dritte Variante des dritten Fließbildes, die eine dritte, besonders bevorzugte Ausführungsform des dritten Prozessablaufes zur Herstellung des alkoholfreien Erfrischungsgetränkes zeigt;
- Fig. 6: ein viertes Fließbild, das einen vierten Prozessablauf zur Herstellung des alkoholfreien Erfrischungsgetränkes zeigt;
- Fig. 7: ein fünftes Fließbild, das einen fünften Prozessablauf zur Herstellung des alkoholfreien Erfrischungsgetränkes zeigt; und
- Fig. 8: einen sechstes Fließbild, das einen fünften Prozessablauf zur Herstellung des alkoholfreien Erfrischungsgetränkes zeigt.

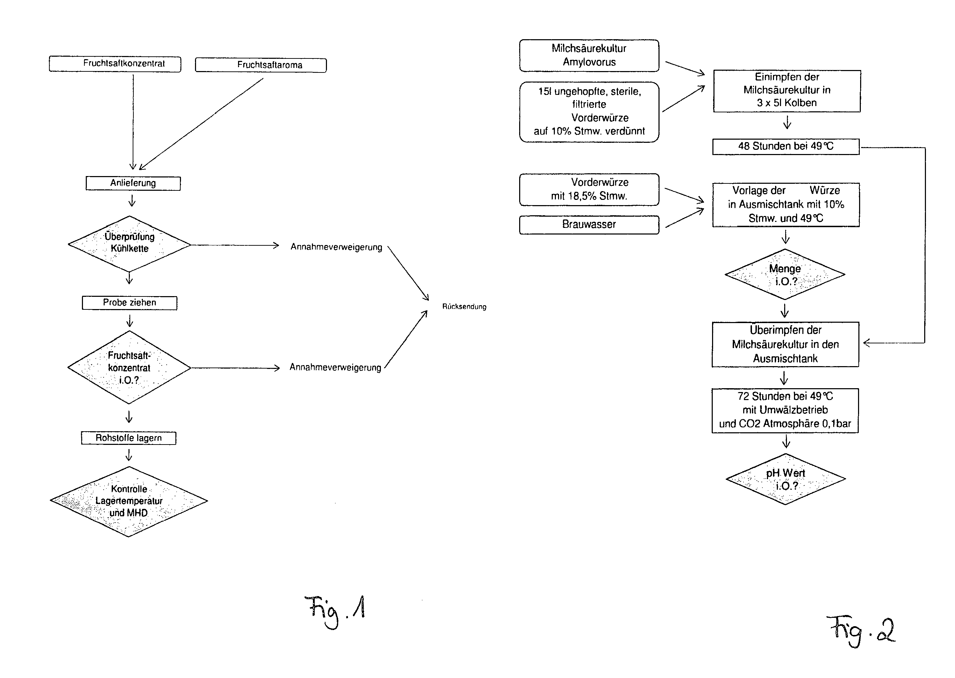

In einem ersten Prozessablauf, dargestellt in dem Fließbild der Fig. 1, werden ein Fruchtsaftkonzentrat und ein Fruchtsaftaroma in einer Brauerei angeliefert. Nach Überprüfung der Kühlkette wird entweder die Annahme verweigert, wenn sich herausstellt, dass die Kühlkette nicht geschlossen war, und das Fruchtsaftkonzentrat bzw. das Fruchtsaftaroma zurückgesendet, oder eine Probe gezogen und diese einer Qualitätskontrolle unterzogen. Ist die Probe laut Qualitätskontrolle in Ordnung, wird das Fruchtsaftkonzentrat bzw. das Fruchtsaftaroma gelagert, im Falle, dass die Probe nicht in Ordnung ist, wird die Annahme verweigert und das Produkt zurückgesendet. Bei der Lagerung der Rohstoffe wird beständig das Mindesthaltbarkeitsdatum sowie die Lagertemperatur kontrolliert.

In Fig. 2 ist die Herstellung eines Sauergutes aus einer Würze durch Fermentation mit einer Milchsäurekultur als zweiter Prozessablauf dargestellt. In einem ersten Schritt wird als Milchsäurekultur ein Lactobacillus amylovorus in drei Fraktionen aus jeweils 5 Litern ungehopfter, steriler, filtrierter Würze eingeimpft, die zuvor aus einer Vorderwürze hergestellt wurde, die auf 10% Stammwürze verdünnt wurde. Nach Einimpfen der Milchsäurekultur in die drei 5-Liter-Fraktionen, d.h. in drei 5 Liter-Kolben, verbleibt das so hergestellte Inoculum 48 Stunden bei 49°C.

Gleichzeitig wird in einem vorbestimmten Mengenverhältnis eine Vorderwürze mit 18,5% Stammwürzegehalt mit Brauwasser zu einem Stammwürzegehalt von 10% vermengt und in einen Ausmischtank gegeben. Diese Vorlage wird bei einer Temperatur von 49°C gehalten. Nach Kontrolle der in dem Ausmischtank vorliegenden Menge der Vorlage wird das nach dem oben beschriebenen Verfahren gezüchtete Inoculum in den Ausmischtank geimpft. Danach erfolgt für 72 Stunden ein Umwälzbetrieb bei 49°C unter einer CO₂-Atmosphäre mit einem Überdruck von 0,1 bar. Um den Sauerstoffgehalt in dem Ausmischtank möglichst gering zu halten, wird vor Einfüllen der Vorlage in den Ausmischtank eine CO₂-Spülung durchgeführt. Da CO₂ schwerer ist als Luft, wird die Umgebungsluft aus dem Ausmischtank verdrängt, und der Sauerstoffgehalt in dem Ausmischtank weitestgehend reduziert. Während des Umwälzbetriebes verstoffwechselt die Milchsäurekultur einen in der Würze vorliegenden Zucker zu Milchsäure. Über eine pH-Wert-Kontrolle wird festgestellt, ob die Verstoffwechslung und somit die Herstellung der Milchsäure bereits bis zum gewünschten Punkt erfolgt ist.

Der erste und der zweite Prozessablauf können gesondert zur Herstellung des Getränks durchgeführt werden. Alternativ wird ein ohnehin in einer Brauerei bei der Bierherstellung hergestelltes Sauergut verwendet. In beiden Fällen liegt ein Sauergut für die weitere Bearbeitung vor.

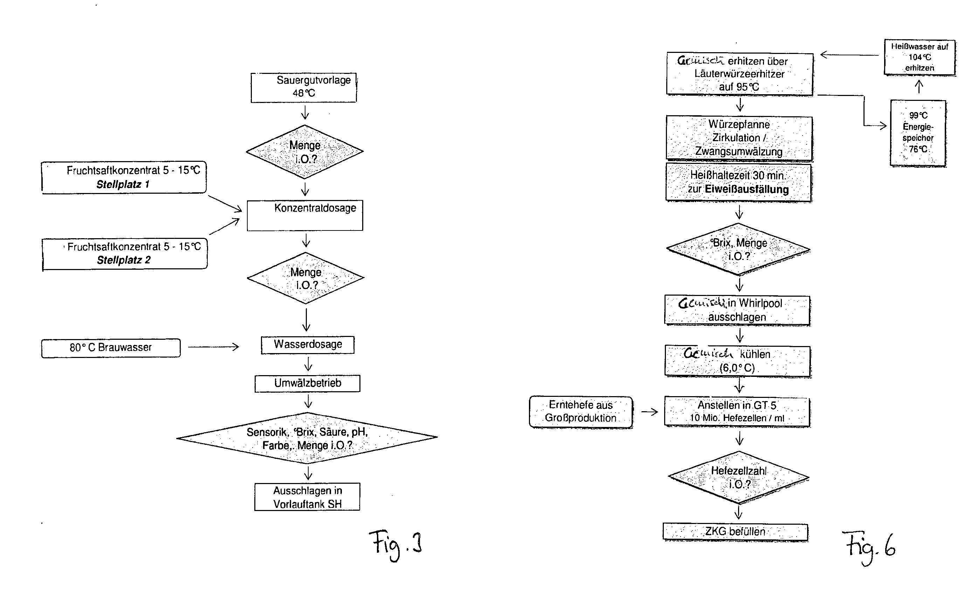

Die nachfolgenden Fließbilder der Fig. 3 bis 5 zeigen Ausführungsbeispiele von drei Ausführungsformen eines dritten Prozessablaufs zur Herstellung des alkoholfreien Erfrischungsgetränks.

Fig. 3 zeigt ein Ausführungsbeispiel für eine erste Ausführungsform des dritten Prozessablaufes, bei dem das nach dem zweiten Prozess gemäß Fig. 2 hergestellte oder vorliegende Sauergut auf eine Temperatur von 48°C gebracht wird. Nach einer Mengenkontrolle werden z.B. zwei in verschiedenen Stellplätzen gelagerte Fruchtsaftkonzentrate zu dem Sauergut hinzudosiert. Die Fruchtsaftkonzentrate weisen eine Temperatur von 5 bis 15 °C auf. Alternativ können auch Fruchtsaftgemische oder ein einziges Fruchtsaftkonzentrat/ein einziger Fruchtsaft verwendet werden. Nach erneuter Mengenkontrolle wird 80°C heißes Brauwasser zugefügt und danach umgewälzt. Es werden physikalische und chemische Eigenschaften, wie der °Brix-Wert, der Säuregehalt, der pH-Wert, die Farbe und die Menge des Gemisches überprüft. Danach wird das Gemisch in einen Vorlauftank ausgeschlagen. Vor Weiterbehandlung haben die Milchsäurebakterien zumindest kurzzeitig die Gelegenheit, den durch die Fruchtsaftkonzentrate eingebrachten weiteren Zucker zu verstoffwechseln. Bei der ersten Ausführungsform weist das resultierende Getränk eine geringe Menge an durch Verstoffwechlsung von durch die Fruchtsaftkonzentrate eingebrachtem Zucker erzeugter Säure auf.

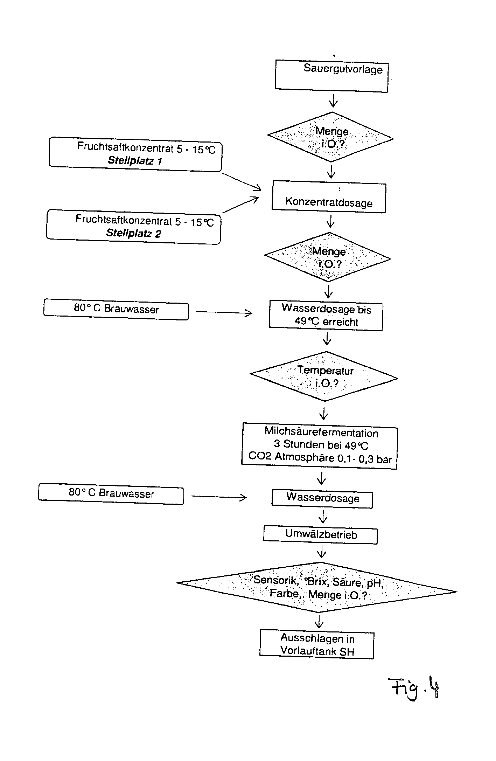

Fig. 4 zeigt ein Ausführungsbeispiel einer zweiten Ausführungsform des dritten Prozessablaufes, bei dem das nach dem zweiten Prozess gemäß Fig. 2 hergestellte oder vorliegende Sauergut auf seine Menge kontrolliert und danach zwei Fruchtsaftkonzentrate mit einer Temperatur von 5 bis 15°C hinzudosiert werden. Alternativ können auch Fruchtsaftgemische oder ein einziges Fruchtsaftkonzentrat/ein einziger Fruchtsaft verwendet werden. Nach einer weiteren Mengenüberprüfung wird eine geeignete Menge an Brauwasser mit einer Temperatur von 80°C hinzugefügt, bis eine Temperatur von 49°C in dem Ausmischtank erreicht worden ist. Nach Kontrolle der Temperatur haben die Milchsäurebakterien drei Stunden die Gelegenheit, bei der Temperatur von 49°C und einer CO₂-Überdruckatmosphäre von 0,1 bis 0,3 bar, einen weiteren nun in dem Sauergut vorliegenden Zucker, insbesondere einen durch die Fruchtsaftkonzentrate eingebrachten Zucker, zu fermentieren. Nach der Fermentation wird Brauwasser mit 80°C zudosiert und das Gemisch umgewälzt. Es werden physikalische und chemische Eigenschaften, wie der °Brix-Wert, der Säuregehalt, der pH-Wert, die Farbe und die Menge des Gemisches überprüft. Danach wird das Gemisch in einen Vorlauftank ausgeschlagen. Bei der zweiten Ausführungsform weist das resultierende Getränk eine größere Menge an durch Verstoffwechslung von durch die Fruchtsaftkonzentrate eingebrachtem Zucker erzeugter Säure als bei der ersten Ausführungsform auf.

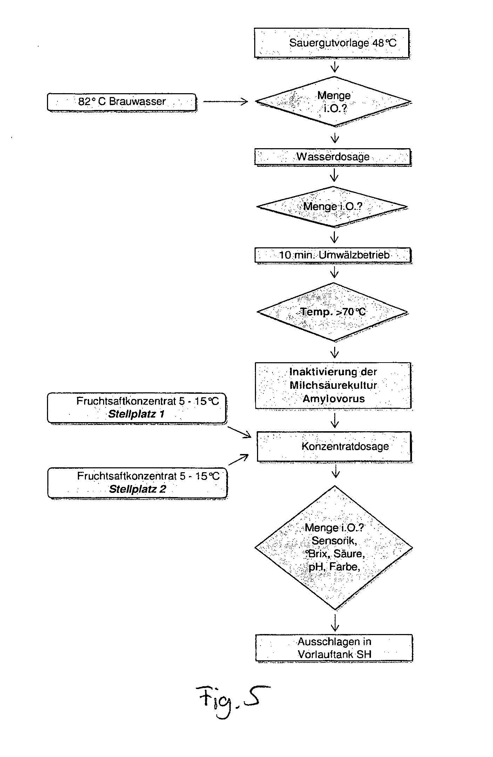

Fig. 5 zeigt ein Ausführungsbeispiel einer dritten Ausführungsform des dritten Prozessablaufs, bei dem der Sauergutvorlage bei einer Temperatur von 48 °C Brauwasser mit einer Temperatur von 82 °C zugefügt wird. Nach Überprüfung der Menge wird weiter Wasser zudosiert und die Menge kontrolliert. Nachdem das Gemisch 10 Minuten umgewälzt worden ist, weist das Gemisch eine Temperatur von 70 °C auf, wobei die Milchsäurebakterien inaktiviert werden. Erst danach werden zwei Fruchtsaftkonzentrate mit einer Temperatur von 5 bis 15 °C hinzudosiert. Es werden physikalische und chemische Eigenschaften, wie der °Brix-Wert, der Säuregehalt, der pH-Wert, die Farbe und die Menge des Gemisches überprüft. Danach wird das Gemisch in einen Vorlauftank ausgeschlagen. Durch Inaktivieren der Milchsäurebakterien vor Zugabe der Fruchtsaftkonzentrate besteht keine Gelegenheit zur Verstoffwechslung, d.h. lediglich die Maltose in der Würze wird durch den Milchsäurestamm zu Säure umgewandelt. Die dritte Ausführungsform ist besonders bevorzugt, da durch dieses Verfahren der Säuregehaltes des Sauergut-Fruchtlösungsgemischs nicht erhöht wird. Dies führt zu einem besonders ausgewogenen Geschmack des resultierenden Getränks.

Im Anschluss an jede der drei Varianten des dritten Prozessablaufes folgt ein vierter Prozessablauf, der bei den hier dargestellten Ausführungsbeispielen bei allen drei Varianten gleich ist und im Folgenden näher beschrieben wird.

In Fig. 6 ist ein Ausführungsbeispiel für den vierten Prozessablauf dargestellt. Das Gemisch wird unter Verwendung eines Energiespeicherkreislaufs über einen Läuterwürzeerhitzer auf 95°C erhitzt. Dazu wird Wasser mit einer Temperatur von 76 °C in einem Energiespeicher auf 99 °C und dann in einem weiteren Schritt auf 104 °C erhitzt. Das Wasser gibt seine Temperatur zum Erhitzen des Gemisches in dem Vorlauftank an einen Läuterwürzeerhitzer weiter. Dabei werden Trübstoffe aus dem Gemisch ausgefällt sowie die Milchsäurekultur durch Abtötung inaktiviert, sofern dies nicht bereits im dritten Prozessablauf erfolgt ist. Das Gemisch wird in eine Würzepfanne überführt und dort zirkuliert bzw. umgewälzt. Die Temperatur wird zur Ausfällung von Eiweiß und Gerbstoffen für 30 Minuten beibehalten. Danach werden der der °Brix-Wert sowie die Menge überprüft. Danach wird das Gemisch in einen Whirlpool ausgeschlagen und anschließend mittels eines Plattenwärmetauschers auf 6°C heruntergekühlt. Es werden Hefezellen in einer Konzentration von 5 × 10⁶ Hefezellen/ml in dem Gemisch angestellt. Die Hefezellen sind zuvor durch Ernte aus der brauereieigenen Großproduktion gewonnen worden.

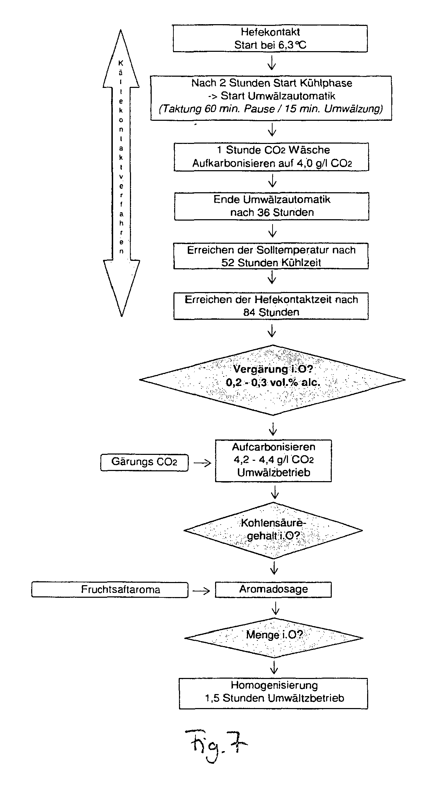

Fig. 7 zeigt ein Ausführungsbeispiel eines im Anschluss an den vierten Prozessablauf durchzuführenden fünften Prozessablaufs zur Herstellung des alkoholfreien Erfrischungsgetränks. Nach Kontrolle der Hefezellzahl in dem Gemisch erfolgt über 52 Stunden eine Kühlphase, bei der das Gemisch beständig herabgekühlt wird, da die Verstoffwechslung des in dem Gemisch vorhandenen Zuckers durch die Hefe in einem Kältekontaktverfahren erfolgen soll. Dabei wird getaktet umgewälzt und nach zwei Stunden das Gemisch eine Stunde mit CO₂ gewaschen, um einen CO₂-Gehal von 4,0 g/l durch Aufcarbonisieren zu erreichen. Nach 36 Stunden wird das Umwälzen, nach 84 Stunden der Hefekontakt beendet. Der Zuckergehalt und somit die Süße der Flüssigkeit ist geringer als in der unfermentierten Getränkegrundlage. Damit wird ein abgerundeter Geschmack ohne Geschmacksspitzen in dem resultierenden Getränk erzeugt. Standardisierte Geschmackstests mit Versuchspersonen haben gezeigt, dass die meisten der Versuchspersonen ein nach dem oben beschriebenen Verfahren hergestelltes Getränk gegenüber anderen fermentativ hergestellten Getränken aufgrund des ausgewogeneren und runderen Geschmacks bevorzugen.

Über den Alkoholgehalt, der im Bereich von 0,2 bis 0,3 Vol. % liegen sollte, wird kontrolliert, ob die Vergärung durch die Hefezellen ordnungsgemäß abgelaufen ist. Danach wird das Getränk aufcarbonisiert, indem Gärungs-CO₂ in einer Konzentration von 4,0 bis 4,4 g/l zu dem Getränk hinzugefügt wird. Nach Überprüfung des Kohlensäuregehaltes in dem Gemisch wird Aroma in Form des Fruchtsaftaromas aus Fig. 1 zu dem Gemisch hinzudosiert und nach Überprüfung der Menge 1,5 Stunden zum Homogenisieren umgewälzt.

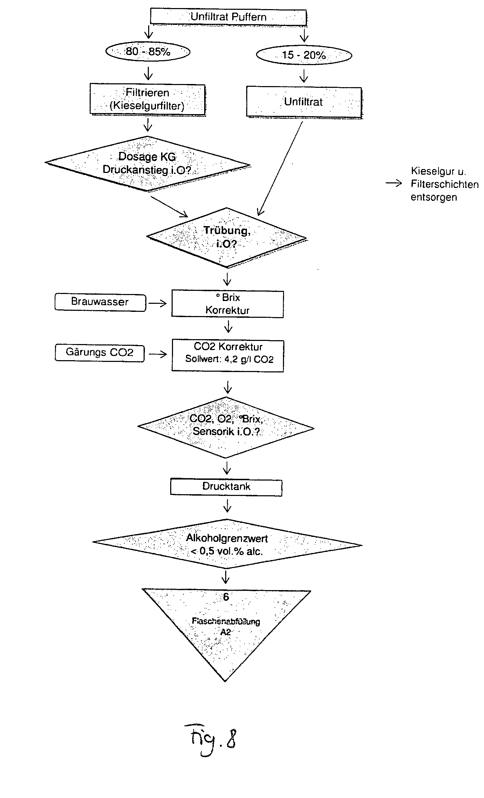

Fig. 8 zeigt ein Ausführungsbeispiel eines im Anschluss an den fünften Prozessablauf durchzuführenden sechsten Prozessablaufs zur Herstellung des alkoholfreien Erfrischungsgetränkes.

Das nichtfiltrierte Gemisch wird gepuffert und danach zu 80-85 % über einen Kieselgurfilter abfiltriert. So können Trübstoffe entfernt und die Haltbarkeit des Getränkes erhöht werden. Nach Abfiltrieren werden der Kieselgurfilter sowie die Filterschichten entsorgt. Der Druckanstieg des Gemisches wird überprüft und dann der restliche nichtfiltrierte Anteil des Gemischs (15-20 %) beigemengt sowie die Trübung kontrolliert.

Danach wird durch Zufügen von Brauwasser eine Korrektur des °Brix-Wertes, falls erforderlich, durchgeführt, um den gewünschten °Brix-Wert zu erzielen. Weiter wird Gärungs-CO₂ zur Korrektur des CO₂-Gehalte in dem Getränk hinzugefügt. Der Sollwert des CO₂-Gehalte liegt bei ca. 4,2 g/l CO₂.

Der CO₂-Gehalt der O₂-Gehalt und der °Brix-Wert werden überprüft. Das fertige alkoholfreie Erfrischungsgetränk wird zur Lagerung in einen Drucktank überführt und der Alkoholwert daraufhin überprüft, ob er den Grenzwert von 0,5 Vol. % alc. nicht überschreitet. Danach wird das fertige alkoholfreie Erfrischungsgetränk zur Flaschenabfüllung weitergeleitet.

In einer hier nicht näher erläuterten Variante kann das beschriebene Herstellungsverfahren zur Herstellung eines alkoholfreien, 100% biologischen Erfrischungsgetränkes verwendet werden.

Es ist bereits eine große Zahl von alkoholfreien Erfrischungsgetränken bekannt. Es handelt sich dabei im Wesentlichen um Fruchtsäfte, Fruchtnektar, modifizierte Fruchtsäfte, Brausen und Limonaden. Bei der Herstellung derartiger Erfrischungsgetränke wird normalerweise Wasser mit Fruchtsäften oder Fruchtauszügen oder deren Ersatzstoffen sowie mit Zucker oder Süßstoffen und mit Säuren, Konservierungsstoffen und Farb- und Aromastoffen versetzt. Zudem kann ein derartiges Gemisch mehr oder weniger stark carbonisiert werden.

Viele Menschen nehmen sich eine ausgewogene und gesunde Ernährung vor. Der Trend zeigt, dass insbesondere bei den Getränken darauf geachtet wird, welche Zutaten und Inhaltsstoffe darin enthalten sind. Der Verbraucher wird jedoch gegenüber künstlich hergestellten Nahrungsmitteln, einschließlich Getränken, immer kritischer. Das Bedürfnis nach einem alkoholfreien Erfrischungsgetränk, aus reinen Naturprodukten hergestellt, wächst stetig.

Daher wird durch das oben beschriebene Herstellungsverfahren ein fermentiertes und alkoholfreies Erfrischungsgetränk auf Basis neuer Technologien und Verfahren hergestellt, wobei das alkoholfreie Erfrischungsgetränk aus reinen Naturprodukten sowie eventuell auch auf biologischem Wege hergestellt wird und keine künstlichen Inhaltsstoffe aufweist.

Das alkoholfreie Erfrischungsgetränk wird beispielsweise laut folgendem Prozess hergestellt:

Malz wird in Lösung gebracht, gemaischt und anschließend filtriert. Die daraus gewonnene, ungehopfte Würze (Vorderwürze mit einem 18,5%igen Stammwürzegehalt und Brauwasser) wird mit einem Milchsäurestamm bei 49°C fermentiert (erste Fermentationsstufe). Der angewandte Mikroorganismus verstoffwechselt die in der Würze enthaltene Maltose zu L- und D-Milchsäure. Dazu können alle Mikroorganismen bzw. Mikroorganismussysteme eingesetzt werden, die dazu in der Lage sind, L- und D-Milchsäure zu produzieren. Das daraus entstandene Produkt wird allgemein als "Sauergut" bezeichnet.

Dem Sauergut werden nach und nach verschiedene Fruchtsaftkonzentrate und Wasser zugesetzt. Darauf folgt eine Vermischung (Homogenisierung) der Rohstoffe. Das zugesetzte Fruchtsaftkonzentrat stellt somit weitere Zucker zur Verfügung, so dass ein Teil dieser durch das Fruchtsaftkonzentrat zugeführten Zucker von dem nachstehend verwendeten, näher beschriebenen Mikroorganismus bzw. Mikroorganismussystem verstoffwechselt werden kann, sofern die Milchsäurekultur mit 80-grädigem Wasser nicht bereits inaktiviert worden ist.

In einer zweiten, optionalen Milchsäurefermentation wird das homogene Sauergut-Fruchtsaft-Brauwassergemisch bei 49°C einer zweiten Milchsäurefermentation unterzogen, bevor die Restmenge des 80°C heißen warmen Brauwassers zudosiert wird.

Nach erfolgter Durchmischung wird die Flüssigkeit, bestehend aus Sauergut, Fruchtsaftkonzentrat und Wasser, auf über 90°, insbesondere 95°C, erhitzt, um so Trübstoffe (Schwebstoffe) auszufällen und die Mikroorganismen der ersten Fermentationsstufe zu inaktivieren. Trübstoffe können bei der Fermentation Einfluss auf den Geschmack haben und sind deshalb bei der Hefefermentation nicht erwünscht. Die Trübstoffe werden durch Einfluss von Zentrifugalkraft (Rotation) ausgeschieden. Nach einer thermischen Behandlung wird das Produkt auf 6,0°C abgekühlt.

Zur Durchführung der zweiten Fermentationsstufe wird dem Produkt während der Kühlphase eine genau definierte Hefemenge des Hefestammes Saccharomyces carlsbergensis beigemengt und in einen Fermentationstank (zylindrisch-konischer Gärtank) gepumpt. Eine Sauerstoffbelastung der Flüssigkeit wird bei diesem Prozessschritt verhindert..

Der zur zweiten Fermentationsstufe eingesetzte Mikroorganismus soll einen Teil des im Produkt enthaltenen Angärzuckers (nämlich die im Wesentlichen durch Fruchtsaftkonzentrat eingebrachten Zucker) verstoffwechseln. Dabei dient das Stoffwechselprodukt Alkohol als Leitwert, der den Grenzwert von 0,5 Vol. % alc. nicht überschreiten darf. Ein alkoholfreies Erfrischungsgetränk muss, um als alkoholfrei bezeichnet werden zu können, einen Alkoholgehalt von weniger als 0,5 Vol. % aufweisen. Der Prozessschritt Gärung wird durch die Einleitung der Kühlphase gesteuert und unterbrochen. Während der Kühlphase erfolgt die ersten 36 Stunden eine getakteter Umwälzbetrieb, um eine homogene Fermentation zu gewährleisten.

Die Kühlphase mit einer Dauer von ca. 58 Stunden soll einige Stunden bei tiefer Temperatur um 0,2°C andauern, um eine Ausfällung der Trübstoffe, vorwiegend Eiweißfraktionen, zu erzielen. Diese setzen sich im Konus des Fermentationstanks ab und werden am Ende der Kühlphase abgeschlämmt.

Nach beendeter Fermentation folgt der Prozessschritt der Aufcarbonisierung. Dem Produkt wird dabei während des Umwälzbetriebes natürliche Gärkohlensäure zugesetzt. Der Kohlensäuregehalt im Produkt kann individuell eingestellt werden, und beträgt z.B. ca. 4,2 g/l CO₂.

Um das Getränk geschmacklich weiter abzurunden, wird dem Produkt natürliches Aroma beigemengt. Es erfolgt eine erneute Durchmischung zur Homogenisierung.

Im Anschluss daran wird das Produkt filtriert oder separiert. Mittels Kieselgurfiltration (Diatomeen) werden Trübstoffe (Schwebstoffe wie Eiweißpartikel und Hefezellen) schonend herausgefiltert. Mit der Filtration kann man durch Klärung einen gewünschten Grad einer Trübung des fertigen Getränks einstellen.

Die Zutaten zur Herstellung des alkoholfreien Erfrischungsgetränkes sind somit Wasser, Fruchtsaftkonzentrat, Gerstenmalz, eventuell weitere, insbesondere vermälzte, Cerealien und natürliches Brombeeraroma.

Nach der Analytik von einzelnen Kontrollstellen des Herstellungsprozesses ergeben sich folgende Werte:
- Stammwürzegehalt von 7,98 Gew. %
- Alkoholgehalt von 0,22 Gew. %
- Alkoholgehalt von 0,28 Vol. %
- Farbeinheiten 430 nm, 15,4 EBC
- pH-Wert von 3,57
- Extrakt 7,44% scheinbar
- Extrakt 7,55% wirklich
- Vergärungsgrad 6,67% scheinbar
- Vergärungsgrad 5,57% wirklich
- Dichte 20/20: 1,02950 g/cm³
- Dichte 20/4: 1,02765 g/cm³
- Physiologischer Brennwert 123 kJ/100 ml

Im Gegensatz zu dem Verfahren der WO 2010/015416 wird bei dem hier beschriebenen Verfahren keine Getränkegrundlage auf Basis von Malz (Malzbase) durch Hefeverstoffwechlung erzeugt, aus der erst in der Aufbereitungsphase durch Beimengen von Fruchtsäften Getränke unterschiedlicher Geschmacksrichtungen erzeugt werden.

Vielmehr erfolgt die Verstoffwechslung der in der Lösung vorhandenen Zucker durch Hefe vorzugsweise erst nach dem Zumischen der Fruchtsäfte zu der milchsauren Würze. Die Hefe kann somit auch die Zucker der Fruchtsäfte verstoffwechseln, während in dem bekannten Verfahren lediglich der in der Würze vorhandene Zucker durch die Hefe fermentiert wird. Es wird davon ausgegangen, dass bei Zumischung gleicher Fruchtsäfte das mit dem bekannten Verfahren hergestellte herkömmliche Getränk im Vergleich zu dem mit dem hier beschriebenen Verfahren erzeugten Getränk einen höheren Anteil an Fruchtzucker und somit einen größeren Süßegehalt hat.

## Patentansprüche

1. Verfahren zur Herstellung eines alkoholfreien Erfrischungsgetränks mit der Reihenfolge von Schritten:
a) Erzeugen einer Würze aus einem Pflanzenauszug;
b) Erzeugen eines Sauerguts durch Verstoffwechslung eines in der Würze vorliegenden Zuckers mittels einer Milchsäurekultur;
c) Erzeugen eines Sauergut-Fruchtlösungsgemischs durch Ausmischen des Sauerguts mit einer Fruchtlösung;
d) Verstoffwechseln von in dem Sauergut-Fruchtlösungsgemisch vorliegendem Zucker mittels eines Hefestamms;
e) Aufbereiten des Sauergut-Fruchtlösungsgemisch.

2. Verfahren nach Anspruch 1,
**dadurch gekennzeichnet, dass** eine Würze mit einem Stammwürzgehalt von 0% bis 20%, vorzugsweise 8% bis 12%, verwendet wird.

3. Verfahren nach Anspruch 1 oder 2,
**dadurch gekennzeichnet, dass** als Pflanzenauszug ein Getreideauszug, vorzugsweise ein einen Gerstenauszug enthaltenden Auszug, verwendet wird.

4. Verfahren nach einem der voranstehenden Ansprüche,
**dadurch gekennzeichnet, dass** der Schritt b) die Teilschritte b1) Einimpfen der Milchsäurekultur, insbesondere eines Lactobacillus amylovorus, in die Würze und b2) Überimpfen der Milchsäurekultur in die Würze und/oder Schritt b3) Erhitzen des erzeugten Sauerguts zum Inaktivieren der Milchsäurekultur aufweist.

5. Verfahren nach Anspruch 4,
**dadurch gekennzeichnet, dass** wenigstens einer der Schritte b2) bis d), mindestens d), anaerob in einer CO₂-Überdruck-Atmosphäre, insbesondere bei einem CO₂-Überdruck von 0,05-0,35 bar, durchgeführt werden.

6. Verfahren nach einem der voranstehenden Ansprüche,
**dadurch gekennzeichnet, dass** der Schritt b) 100 bis 150, vorzugsweise 115 bis 130 Stunden, bei einer Temperatur von 40 bis 60°C, vorzugsweise 45 bis 50°C, durchgeführt wird.

7. Verfahren nach einem der voranstehenden Ansprüche,
**dadurch gekennzeichnet, dass** Schritt c) mindestens den Schritt c1) Homogenisieren des Sauergut-Fruchtlösungsgemischs aufweist.

8. Verfahren nach Anspruch 7,
**dadurch gekennzeichnet, dass** Schritt c) die Schritte c1) und c2) Verstoffwechslung eines in dem Sauergut-Fruchtlösungsgemisch vorliegenden weiteren Zuckers mittels der Milchsäurekultur und/oder c3) Erhitzen des Sauergut-Fruchtlösungsgemischs, aufweist.

9. Verfahren nach Anspruch 8,
**dadurch gekennzeichnet, dass** Schritt c2) 1 bis 6 Stunden, vorzugsweise 2 bis 4 Stunden, bei einer Temperatur von 40 bis 60°C, vorzugsweise 45 bis 50°C, durchgeführt wird.

10. Verfahren nach einem der voranstehenden Ansprüche,
**dadurch gekennzeichnet, dass** Schritt c3) bei 80 bis 100°C, vorzugsweise 85 bis 95°C, durchgeführt wird.

11. Verfahren nach einem der voranstehenden Ansprüche,
**dadurch gekennzeichnet, dass** Schritt d) 80 bis 90 Stunden bei kontinuierlich absinkender Temperatur durchgeführt wird.

12. Verfahren nach einem der voranstehenden Ansprüche,
**dadurch gekennzeichnet, dass** Schritt d) die Teilschritte d1) Abkühlen des Sauergut-Fruchtlösungsgemischs auf 0 bis 10°C, vorzugsweise 4 bis 8°C, und d2) Anstellen des Hefestamms aufweist.

13. Verfahren nach einem der voranstehenden Ansprüche,
**dadurch gekennzeichnet, dass** ein untergäriger Hefestamm, vorzugsweise Saccharomyces carlsbergensis, in einer Konzentration von 5-15 • 10⁶ Hefezellen/ml in dem Sauergut-Fruchtlösungsgemisch angestellt wird.

14. Verfahren nach einem der voranstehenden Ansprüche,
**dadurch gekennzeichnet, dass** Schritt e) die Schritte Aufcarbonisieren, Aromatisieren und/oder Filtrieren aufweist.

15. Alkoholfreies Erfrischungsgetränk, erhältlich mit einem Herstellungsverfahren nach einem der Ansprüche 1 bis 14.

## Claims

1. Method for producing an alcohol-free refreshing drink, comprising the sequence of steps:
a) producing a wort from plant extracts;
b) producing a sour wort by metabolizing a sugar present in the wort by means of an lactic acid culture;
c) producing a sour wort-fruit solution mixture by dosing and mixing the sour wort with a fruit solution;
d) metabolizing sugar present in the sour wort-fruit solution mixture by means of a yeast strain;
e) preparing the sour wort-fruit solution mixture.

2. Method according to claim 1,
**characterized in that** a wort is used having a gravity content of 0% to 20%, preferably 8% to 12%.

3. Method according to claim 1 or 2,
**characterized in that** a cereal extract, preferably an extract containing a barley extract, is used as a plant extract.

4. Method according to one of the preceding claims,
**characterized in that** step b) comprises the sub-steps b1) of inoculating the lactic acid culture, particularly of the type Lactobacillus amylovorus, into the wort, and b2) of transferring the lactic acid culture in the wort, and/or step b3) of heating the produced sour wort for deactivating the lactic acid culture.

5. Method according to claim 4,
**characterized in that** at least one of the steps b2) to d), at least d), is carried out anaerobically in a CO₂ overpressure atmosphere, particularly at a CO₂ overpressure of 0.05-0.35 bar.

6. Method according to one of the preceding claims,
**characterized in that** step b) is carried out for 100 to 150 hours, preferably 115 to 130 hours, at a temperature of 40 to 60°C, preferably 45 to 50°C.

7. Method according to one of the preceding claims,
characterized that step a) at least comprises step c1) of homogenizing the sour wort-fruit solution mixture.

8. Method according to claim 7,
**characterized in that** step c) comprises the steps c1) and c2) of metabolizing a further sugar present in the sour wort-fruit solution mixture using a lactic acid culture, and/or c3) heating the sour wort-fruit solution mixture.

9. Method according to claim 8,
**characterized in that** step c2) is carried out for 1 to 6 hours, preferably 2 to 4 hours, at a temperature of 40 to 60°C, preferably 45 to 50°C.

10. Method according to one of the preceding claims,
**characterized in that** step c3) is carried out at 80 to 100°C, preferably 85 to 95°C.

11. Method according to one of the preceding claims,
**characterized in that** step d) is carried out for 80 to 90 hours at a continuously decreasing temperature.

12. Method according to one of the preceding claims,
**characterized in that** step d) comprises the sub-steps d1) of cooling the sour wort-fruit solution mixture to 0 to 10°C, preferably 4 to 8°C, and d2) of preparing the yeast strain.

13. Method according to one of the preceding claims,
**characterized in that** a bottom-fermenting yeast strain, preferably of the type Saccharomyces carlsbergensis, is prepared at a concentration of 5-15 • 10⁶ yeast cells/ml in the sour wort-fruit solution mixture.

14. Method according to one of the preceding claims,
**characterized in that** step e) comprises the steps of carbonization, aromatization and filtration.

15. Alcohol-free refreshing drink, obtainable by the production method according to one of the claims 1 to 14.

## Revendications

1. Procédé de fabrication d'une boisson rafraîchissante sans alcool, le procédé comprenant la séquence des étapes:
a) produire un moût d'un extrait végétal;
b) produire un produit aigre par la métabolisation d'un sucre présent dans le moût par le biais d'une culture acide lactique;
c) produire un mélange produit aigre-solution de fruits par le dosage et mélange du produit aigre avec une solution de fruits;
d) métaboliser le sucre présent dans le mélange produit aigre-solution de fruits par le biais d'une souche de levure;
e) préparer le mélange produit aigre-solution de fruits.

2. Procédé selon la revendication 1,
**caractérisé en ce qu'**on utilise un moût à teneur en moût primitif de 0% à 20%, de préférence 8% à 12%.

3. Procédé selon la revendication 1 ou 2,
**caractérisé en ce qu'**on utilise, en tant qu'extrait végétal, un extrait de céréale, de préférence un extrait contenant un extrait d'orge.

4. Procédé selon l'une des revendications précédentes,
**caractérisé en ce que** l'étape b) comprend les sous-étapes b) d'inoculer la culture acide lactique, notamment du type Lactobacillus amylovorus, dans le moût, et b2) de transférer la culture acide lactique dans le moût et/ou l'étape b3) de chauffer le produit aigre généré pour désactiver de la culture acide lactique.

5. Procédé selon la revendication 4, **caractérisé en ce qu'**au moins une des étapes b2) à d), au moins d), soit exécutée de manière anaérobique dans une atmosphère en surpression de CO₂, notamment une surpression de CO₂ de 0,05-0,35 bar.

6. Procédé selon l'une des revendications précédentes,
**caractérisé en ce que** l'étape b) soit exécutée pour une durée de 100 à 150, de préférence 115 à 130 heures, à une température de 40 à 60°, de préférence 45 à 50°.

7. Procédé selon l'une des revendications précédentes,
**caractérisé en ce que** l'étape c) au moins comprend l'étape c1) de homogénéiser le mélange produit aigre-solution de fruits.

8. Procédé selon la revendication 7,
**caractérisé en ce que** l'étape c) comprend les étapes c1) et c2) de métaboliser un autre sucre présent dans le mélange produit aigre-solution de fruits par le biais de la culture acide lactique, et/ou c3) de chauffer le mélange produit aigre-solution de fruits.

9. Procédé selon la revendication 8,
**caractérisé en ce que** l'étape c2) soit exécutée pour une durée de 1 à 6 heures à une température de 40 à 60°C, de préférence 45 à 50°C.

10. Procédé selon l'une des revendications précédentes,
**caractérisé en ce que** l'étape c3) soit exécutée à une température de 80 à 100°C, de préférence 85 à 95°C.

11. Procédé selon l'une des revendications précédentes,
**caractérisé en ce que** l'étape d) soit exécutée pour une durée de 80 à 90 heures à une température diminuant continûment.

12. Procédé selon l'une des revendications précédentes,
**caractérisé en ce que** l'étape d) comprend les sous-étapes d1) de refroidir le mélange produit aigre-solution de fruits à une temperature de 0 à 10°C, de préférence 4 à 8°C, et d2) de préparer la souche de levure.

13. Procédé selon l'une des revendications précédentes,
**caractérisé en ce qu'**on prépare une souche de levure à fermentation basse, de préférence du type Saccharomyces carlsbergensis, à une concentration de 5-15 • 10⁶ cellules de levure/ml dans le mélange produit aigre-solution de fruits.

14. Procédé selon l'une des revendications précédentes,
**caractérisé en ce que** l'étape e) comprend les étapes: carbonisation, aromatisation et/ou filtration.

15. Boisson rafraîchissante sans alcool, qui peut s'obtenir par un procédé selon l'une des revendications 1 à 14.
